# EUROPÄISCHE PATENTSCHRIFT

(11) **EP 1 647 779 B1**
(45) Veröffentlichungstag und Bekanntmachung des Hinweises auf die Patenterteilung: **20.02.2008**
(21) Anmeldenummer: 05110457.8
(22) Anmeldetag: 01.07.2002
(51) Int. Cl.: F24F 5/00, F03D 11/00

(54) **Windenergieanlage**
Wind energy installation
Installation d'energie eolienne

(30) Priorität: 10.08.2001 DE 10139556
(43) Veröffentlichungstag der Anmeldung: 19.04.2006
(62) Teilanmeldung aus: 02794497.4
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner

(56) Entgegenhaltungen:
- WO-A-01/21956
- WO-A-99/30031
- DE-A1- 10 000 370
- DE-A1- 10 016 913
- DE-A1- 19 947 915
- US-A- 3 552 133
- PATENT ABSTRACTS OF JAPAN Bd. 1996, Nr. 02, 29. Februar 1996 (1996-02-29) -& JP 07 280293 A (AZUMA KOGYO KK), 27. Oktober 1995 (1995-10-27)
- PATENT ABSTRACTS OF JAPAN Bd. 1995, Nr. 08, 29. September 1995 (1995-09-29) -& JP 07 133940 A (MITSUBISHI HEAVY IND LTD), 23. Mai 1995 (1995-05-23)

## Beschreibung

Die vorliegende Erfindung betrifft eine Einrichtung zum Entfeuchten eines gasförmigen Mediums und eine Windenergieanlage mit einer Vorrichtung zum Entfeuchten eines gasförmigen Mediums in einem im Wesentlichen geschlossenen Raum innerhalb der Windenergieanlage.

Eine solche Vorrichtung auf chemischer Basis ist seit langem bekannt. Bei dieser bekannten Vorrichtung wird der Raumluft auf chemischem Weg Feuchtigkeit entzogen und diese wird in einem Auffangbehälter gesammelt. Bei dieser bekannten Vorrichtung ist es jedoch nachteilig, dass die Chemikalie in bestimmten zeitlichen Abständen ersetzt werden muss, um die Funktionsfähigkeit zu erhalten. Dies erfordert bei einer Vielzahl von Vorrichtungen, die zentral überwacht und gewartet werden sollen, zusätzlichen personellen und logistischen Aufwand.

Weiterhin sind Vorrichtungen der eingangs genannten Art bekannt, bei denen ein umgrenzter Raum nach dem Wirkprinzip eines Kühlschrankes über eine Kompressor/Verdampfer-Einheit mittels eines besonders hierfür vorgesehenen Kühlmittels abgekühlt wird, um so der in diesem Raum enthaltenen Luft Feuchtigkeit zu entziehen.

Bei diesen Vorrichtungen ist jedoch der Aufbau aufwändig und zusätzlich es erforderlich, dass die Kühlflüssigkeit die bei der Entsorgung getrennt gesammelt werden muss.

Aus der DE 100 00 370 A1 ist eine Windenergieanlage bekannt mit einem völlig geschlossenen oder wenigstens teilweise geschlossenen Kühlkreislauf, bei welchen die aus dem Kühlkreislauf abzuführende Wärme über den Turm oder die Gondel der Windenergieanlage abgegeben wird.

Aufgabe der vorliegenden Erfindung ist es daher, eine Windenergieanlage weiterzubilden, insbesondere eine Windenergieanlage derart auszubilden, dass Feuchtigkeitsprobleme innerhalb der Windenergieanlage auf einfache Art und Weise beseitigt werden können.

Diese Aufgabe wird erfüllt durch eine Windenergieanlage mit den Merkmalen nach Anspruch 1. Vorteilhafte Weiterbildungen sind in den Unteransprüchen beschrieben. Bei der erfindungsgemäßen Windenergieanlage erfüllt ein erstes, flächiges Element und eine Kühlvorrichtung zum Kühlen des Elements auf eine Temperatur unterhalb der Umgebungstemperatur (Raumtemperatur) die Aufgabe. Bei dieser Umgebungstemperatur kondensiert ein Teil der in der Luft enthaltenen Feuchtigkeit an der Oberfläche des ersten Elements. Diese Feuchtigkeit wird auf diese Weise der Umgebungsluft entzogen und kann abgeleitet werden.

Um einen wartungsfreien Dauerbetrieb zu ermöglichen, ist die Kühlvorrichtung bevorzugt ein Peltier-Element bzw. eine Gruppe von Peltier-Elementen, die dem ersten Element Wärme entziehen und dieses dadurch abkühlt. Diese dem ersten Element entzogene Wärme wird über ein zweites Element wieder an die Umgebung abgegeben.

Um eine besonders gute Wirkung zu erzielen, kann das zweite Element mit einer den zu entfeuchtenden Raum begrenzenden Wand verbunden sein oder sogar durch diese gebildet werden.

Die Ableitung des Kondenswassers kann durch einen Kanal und einen Wanddurchbruch ins Freie erfolgen. Dabei kann dieser Wanddurchbruch bevorzugt in Bodennähe vorgesehen sein, um Spuren von Tropfwasser an Außenwänden zu vermeiden.

Um bei einer Verstopfung des Kanals zum Ableiten des Kondenswassers ein unkontrolliertes Herabtropfen des Kondenswassers innerhalb des Raumes zu vermeiden, kann ein Behälter vorgesehen sein, der diese Tropfen auffängt. Somit kann im Rahmen einer Inspektion oder nach einer Signalisierung eines entsprechend in dem Behälter angeordneten Sensors dieser Behälter entleert werden. Gleichzeitig kann der Verschluss des Kanals beseitigt werden, so dass das Kondenswasser wieder selbsttätig aus dem Raum entfernt wird.

In einer besonders bevorzugten Weiterbildung der Erfindung ist ein erster Temperatursensor zum Erfassen der Temperatur des ersten Elements und ein zweiter Temperatursensor zum Erfassen der Umgebungstemperatur vorgesehen. Mittels dieser Sensoren und einer nachgeordneten Steuerungsvorrichtung kann die erfindungsgemäße Vorrichtung derart gesteuert werden, dass das erste Element stets eine vorgebbare Temperaturdifferenz gegenüber der Umgebungstemperatur aufweist. Dadurch kann eine konstante Entfeuchtungs-Leistung erreicht werden.

Vorteilhafte Ausführungsformen sind in den Unteransprüchen angegeben.

Raumluftentfeuchter sind bereits bekannt aus DE-U-92 10 970.5, DE 44 23 851, DE-PS-1189250, EP 0 758 730 A2 sowie US-5,071,027. Der Einsatz solcher Raumluftentfeuchter innerhalb von Windenergieanlagen ist bislang noch nicht vorgeschlagen worden.

Im Folgenden wird eine Ausführungsform der Erfindung anhand der Zeichnungen näher erläutert. Dabei zeigen:
- Figur 1: eine perspektivische Darstellung einer erfindungsgemäßen Vorrichtung;
- Figur 2: eine weitere Darstellung der erfindungsgemäßen Vorrichtung; und
- Figur 3: eine Anordnung einer erfindungsgemäßen Vorrichtung im Turm einer Windenergieanlage;
- Figur 4: eine perspektivische Darstellung einer erfindungsgemäßen Vorrichtung.

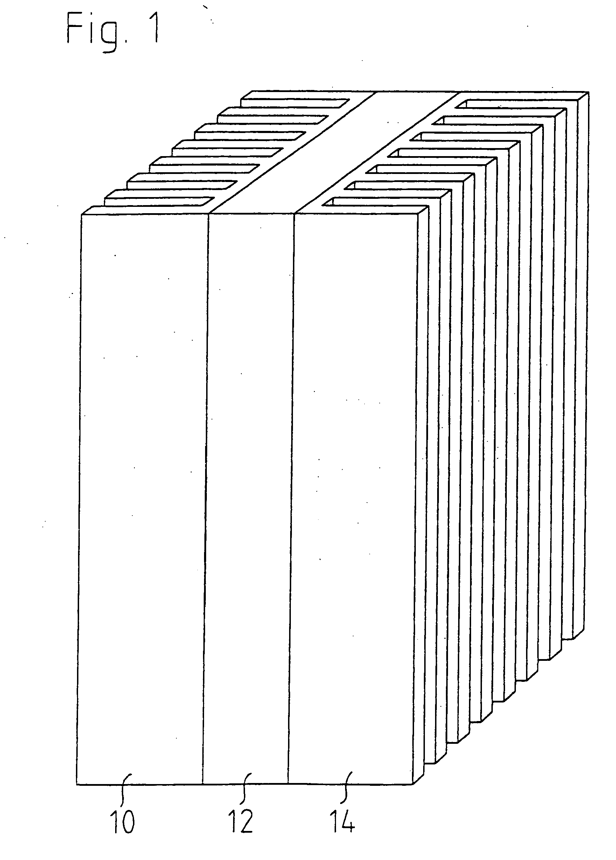

In Figur 1 ist eine erfindungsgemäße Vorrichtung in einer Seitenansicht dargestellt. Zwischen einem ersten Element 10 und einem zweiten Element 14 befindet sich eine Kühlvorrichtung 12. Diese Kühlvorrichtung 12 ist ein mit elektrischer Energie betriebenes Peltier-Element bzw. eine Gruppe von Peltier-Elementen. Sie bewirkt einen Wärmetransport von einer lateralen Grenzfläche zu der anderen - in diesem Fall wird die Wärme von dem ersten Element 10 zu dem zweiten Element 14 transportiert.

Wird die Kühlvorrichtung 12 mit einem geeigneten, nach Betrag und Richtung vorgegebenen Strom beaufschlagt, wird dem ersten Element 10 Wärme entzogen und zu dem zweiten Element 14 transportiert, wo sie wiederum an die Umgebung abgegeben wird. Das erste Element 10 und das zweite Element 14 sind bevorzugt als Kühlkörper ausgeführt, also flächige Aluminium-Elemente mit darauf verlaufenden Kühlrippen zur Vergrößerung der wirksamen Oberfläche.

Durch den Entzug von Wärme kühlt sich das erste Element 10 unter die Umgebungstemperatur ab und die in der Umgebungsluft enthaltene Feuchtigkeit kondensiert an diesem Element 10.

Da die oberflächenvergrößernden Kühlrippen des ersten Elements 10 vertikal verlaufen, kann das Kondenswasser leicht durch Schwerkraftwirkung nach unten ablaufen und kann dann entsprechend ausgesammelt und im Bedarfsfall mittels Leitungen abgeführt werden.

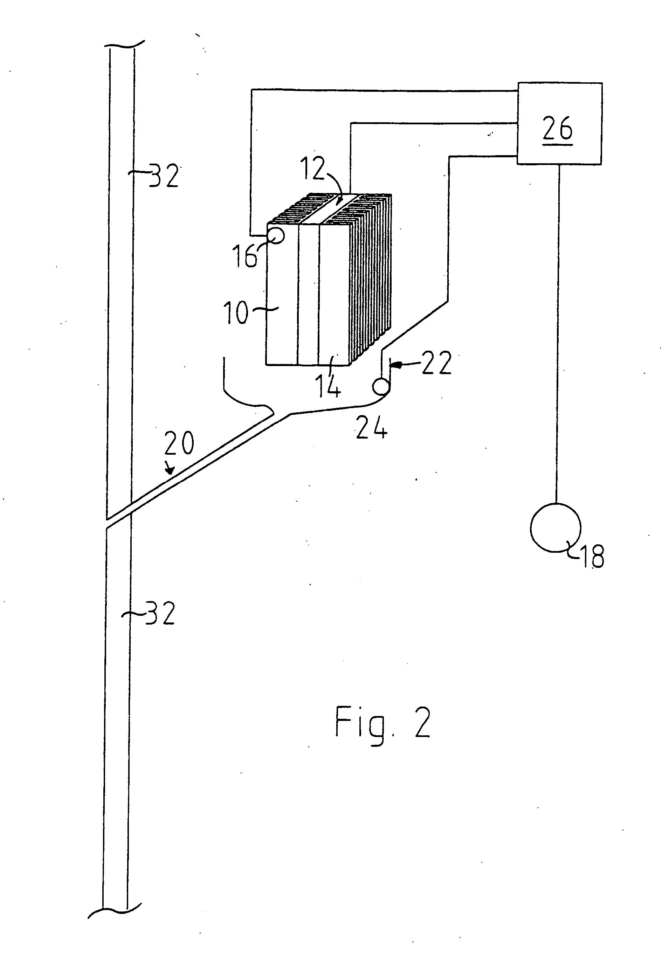

Aus der in Figur 2 gezeigten Seitenansicht ist erkennbar, dass das entlang der Kühlrippen des ersten Elements 10 nach unten ablaufende Kondenswasser in einen Kanal 20 gelangt, der durch eine Wand 32 hindurch ins Freie geführt ist, so dass das Kondenswasser problemlos ins Freie ablaufen kann.

Sollte es zu einer Verstopfung dieses Kanals 20 kommen, ist zusätzlich ein Auffangraum 22 vorgesehen, der das Kondenswasser speichern kann, so dass es nicht unkontrolliert in Bereiche unterhalb der Vorrichtung tropft. In dem Auffangraum 22 ist ein Flüssigkeitssensor 24 vorgesehen, der ein Ansteigen des Flüssigkeitsspiegels erkennen und ein entsprechendes Signal auslösen kann, das z.B. verwendet werden kann, um Wartungspersonal zu veranlassen, den Verschluss des Kanals 20 zu beseitigen und den Auffangraum zu leeren.

Eine Steuerungsvorrichtung 26 ist vorgesehen, um über einen ersten Temperatursensor 16 die Temperatur des ersten Elements 10 zu erfassen. Über einen zweiten Temperatursensor 18 wird die Umgebungstemperatur erfasst. Die Steuerungsvorrichtung 26 kann dann aus der Temperaturdifferenz und vorgegebenen Sollwerten die erforderliche Steuerung für die Kühlvorrichtung 12 ableiten. Natürlich kann diese Steuerung auch den Flüssigkeitssensor 24 überwachen und die entsprechenden Signale erzeugen und ausgeben.

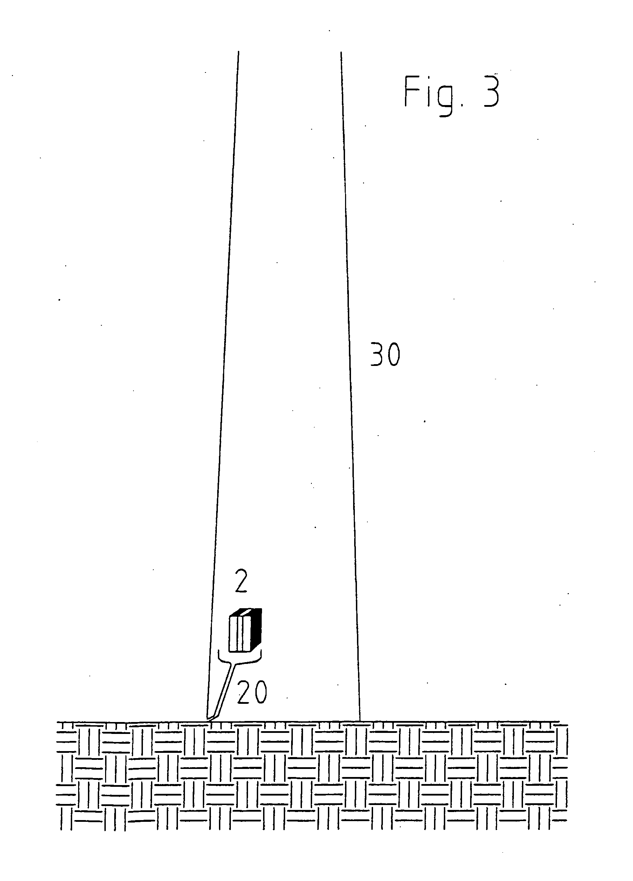

Figur 3 zeigt eine Teilansicht eines Turmes 30 einer Windenergieanlage. Die erfindungsgemäße Vorrichtung, die in dieser Figur in ihrer Gesamtheit mit dem Bezugszeichen 2 bezeichnet ist, sei etwa auf der Hälfte der Höhe des Turmes 30 angeordnet. Der Kanal 20 zum Ableiten des Kondenswassers ist in dieser Figur innerhalb des Turms 30 bis in Bodennähe verlegt und tritt erst dort durch die Wand 32 des Turmes 30 nach außen. Dadurch werden Wasserspuren an der Außenseite der Wand 32 zuverlässig vermieden.

Der bevorzugte Einbauort des erfindungsgemäßen Entfeuchters liegt im Bereich des Turmfußes, der Einbau an anderen Stellen der Windenergieanlage ist aber auch möglich. Der Bereich des Turmfußes hat den Vorteil, dass die regelmäßig im Turmfuß angeordneten Stromrichter von bereits entfeuchteter Luft durchströmt werden.

Eine vorteilhafte weitere Möglichkeit zum Ableiten des Kondenswassers aus dem Turm ergibt sich im Bereich der Zugangstür. Diese wird ohnehin als separates Bauelement in die untere Sektion des Turmes eingebaut. Auf diese Weise lässt sich eine bei einem Durchbruch der Turmwand unerlässliche Konstruktionsänderung vermeiden.

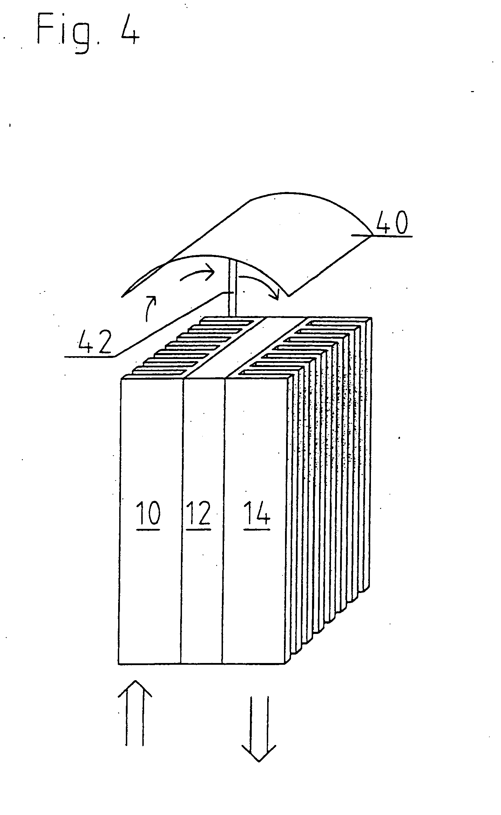

Figur 4 zeigt eine modifizierte Darstellung von Figur 1. Der Unterschied zu Figur 1 besteht im Wesentlichen in einem Leitblech 40, das oberhalb der Kühlkörper (erstes und zweites Element) 10, 14 angeordnet ist und die durch ein Gebläse am ersten (kühlenden) Element entlanggeführte, abgekühlte Luft umlenkt. Diese abgekühlte Luft wird durch das Leitblech 40 auf das zweite (warme) Element 14 umgelenkt und kühlt dieses. Dabei wird das Leitblech 40 durch Stützen 42 in einer vorgegebenen Position gehalten. Der Übersichtlichkeit wegen ist nur eine Stütze 42 dargestellt.

Demnach wird der vorbeiströmenden Luft am ersten Element 10 Wärme entzogen, diese Wärme wird durch die Kühlvorrichtung (Peltier-Element) 12 zu dem zweiten Element 14 transportiert. Das Leitblech 40 lenkt die abgekühlte Luft zu dem zweiten Element 14 um und dort nimmt die Luft (die ihr vorher entzogene) Wärme wieder auf. Auf diese Weise kann die zur Kühlung des zweiten Elements 14 erforderliche Gebläseleistung und damit der Energieverbrauch der Vorrichtung verringert werden.

Wie beschrieben, ist die Funktion der Kühlvorrichtung, wie beispielsweise des Peltier-Elements, also vordergründig nicht die Kühlung der Luft innerhalb der Windenergieanlage, sondern allein die Entfeuchtung des Inneren der Anlage, weshalb auch die gekühlte Luft von einer Seite der Kühlvorrichtung zur anderen Seite umgelenkt wird und dann gleich wieder erwärmt wird und die Temperatur in der Anlage somit kaum beeinflusst wird.

## Patentansprüche

1. Einrichtung zum Entfeuchten eines gasförmigen Mediums, bevorzugt Luft, in einem im Wesentlichen geschlossenen Raum, bevorzugt dem Inneren einer Windenergieanlage,
**gekennzeichnet durch** ein erstes flächiges Element (10) und eine hiermit gekoppelte Kühlvorrichtung (12) zum Kühlen des ersten Elements (10) auf eine Temperatur unterhalb der Raumtemperatur und **durch** ein zweites Element (14) zum Abkühlen der dem ersten Element (10) entzogenen Wärme, die bevorzugt in den Raum zugegeben wird, und dass das zweite Element (14) mit einer Turmwand einer Windenergieanlage verbunden oder **durch** die Turmwandung (32) gebildet ist.

2. Windenergieanlage mit einem Generator, gegebenenfalls einem Transformator und einem mit dem Transformator gekoppelten Stromrichter, wobei in der Nähe des Generators oder des Transformators und/oder des Stromrichters eine Einrichtung zum Entfeuchten der Luft nach Anspruch 1 vorgesehen ist, wobei das erste flächige Element (10) und die hiermit gekoppelte Kühlvorrichtung (12) ausgebildet ist zum Kühlen des ersten Elements (10) auf eine Temperatur unterhalb der Temperatur in der Nähe des Generators oder des Transformators und/oder des Stromrichters.

3. Windenergieanlage nach Anspruch 2,
**dadurch gekennzeichnet, dass** die Einrichtung zum Entfeuchten im Wesentlichen im Inneren der Windenergieanlage angeordnet ist.

4. Windenergieanlage nach einem der Ansprüche 2 oder 3,
**dadurch gekennzeichnet, dass** die Kühlvorrichtung (12) zwischen dem ersten Element (10) und dem zweiten Element (14) angeordnet ist und diese bevorzugt verbindet.

5. Windenergieanlage nach einem der Ansprüche 2 bis 4,
**gekennzeichnet durch** eine den Peltier-Effekt ausnutzende Kühlvorrichtung.

6. Windenergieanlage nach einem der Ansprüche 2 bis 5,
**dadurch gekennzeichnet, dass** eine Auffangeinheit und/oder ein Kanal zum Abführen der dem gasförmigen Medium entzogenen Flüssigkeit vorgesehen ist.

7. Windenergieanlage nach Anspruch 6,
**dadurch gekennzeichnet, dass** die mit dem ersten Flächenelement (10) aufgefangene Flüssigkeit über eine entsprechende Einrichtung, bevorzugt den Kanal (20), aus dem Raum geleitet wird.

8. Windenergieanlage nach Anspruch 7,
**dadurch gekennzeichnet, dass** der Kanal im bodennahen Bereich des Raumes, bei einer Windenergieanlage im Fußbereich des Turmes, angeordnet ist.

9. Windenergieanlage nach einem der Ansprüche 2 bis 8,
**dadurch gekennzeichnet, dass** zum Auffangen der dem gasförmigen Medium entzogenen Flüssigkeit ein Auffangraum vorgesehen ist, in dem die Flüssigkeit gesammelt wird.

10. Windenergieanlage nach einem der Ansprüche 2 bis 9,
**dadurch gekennzeichnet, dass** ein erster Temperatursensor (16) zum Erfassen der Temperatur des ersten Elements (10) und ein zweiter Temperatursensor (18) zum Erfassen der Umgebungstemperatur vorgesehen ist, dass die Temperaturen bevorzugt von einer Steuerungseinrichtung erfasst und verarbeitet werden und die Steuerungseinrichtung die Temperatur des ersten Elements durch Variationen der Kühlleistung der Kühlvorrichtung (12) einstellt.

11. Windenergieanlage nach Anspruch 10,
**dadurch gekennzeichnet, dass** die Steuerungseinrichtung derart gesteuert wird, dass die Temperatur des ersten Elements (10) bei einem vorgebbaren Betrag unterhalb der Raumtemperatur liegt und/oder eine vorgebbare Temperatur nicht übersteigt.

12. Windenergieanlage, bestehend aus einem Turm und einem an der Turmspitze angeordneten Maschinenhaus zur Aufnahme verschiedener Maschinenaggregate der Windenergieanlage,
**dadurch gekennzeichnet, dass** im Turm und/oder Maschinenhaus eine Einrichtung nach einem der vorstehenden Ansprüche angeordnet ist.

13. Windenergieanlage nach Anspruch 12,
**dadurch gekennzeichnet, dass** die Einrichtung etwa im Bereich des Turmfußes der Windenergieanlage angeordnet ist.

14. Windenergieanlage nach einem der Ansprüche 2 bis 13,
**dadurch gekennzeichnet, dass** mehrere Luftentfeuchtungseinrichtungen nach einem der vorstehenden Ansprüche in der Windenergieanlage angeordnet sind.

15. Windenergieanlage nach einem der Ansprüche 2 bis14,
**dadurch gekennzeichnet, dass** mit jeder Luftentfeuchtungseinrichtung etwa ein bis zehn Liter Wasser, bevorzugt zwei bis fünf Liter Wasser, pro Tag der Luft entnommen werden und die gesamte elektrische Leistung der Luftentfeuchtungseinrichtung etwa im Bereich zwischen 50 und 500 W liegt.

## Claims

1. Device for dehumidifying a gaseous medium, preferably air, in a substantially closed space, preferably the interior of a wind power installation,
**characterised by** a first planar element (10) and a cooling device (12) coupled therewith for cooling the first element (10) to a temperature below room temperature, and by a second element (14) for cooling the heat extracted from the first element (10), which heat is preferably delivered into the space, and in that the second element (14) is connected to a tower wall of a wind power installation or is formed by the tower wall (32).

2. Wind power installation having a generator, where applicable a transformer and a power converter coupled to the transformer, wherein a device for dehumidifying the air according to claim 1 is provided in the vicinity of the generator or the transformer and/or the power converter, wherein the first planar element (10) and the cooling device (12) coupled therewith is configured for cooling the first element (10) to a temperature below the temperature in the vicinity of the generator or the transformer and/or the power converter.

3. Wind power installation according to claim 2,
**characterised in that** the device for dehumidifying is disposed substantially in the interior of the wind power installation.

4. Wind power installation according to either claim 2 or claim 3,
**characterised in that** the cooling device (12) is disposed between the first element (10) and the second element (14) and preferably connects them.

5. Wind power installation according to any one of claims 2 to 4,
**characterised by** a cooling device utilising the Peltier effect.

6. Wind power installation according to any one of claims 2 to 5,
**characterised in that** a collecting unit and/or a channel is provided for discharging the liquid extracted from the gaseous medium.

7. Wind power installation according to claim 6,
**characterised in that** the liquid collected with the first planar element (10) is passed out of the space via appropriate means, preferably the channel (20).

8. Wind power installation according to claim 7,
**characterised in that** the channel is disposed in the region of the space which is close to the ground, in a wind power installation in the region of the foot of the tower.

9. Wind power installation according to any one of claims 2 to 8,
**characterised in that** a collecting space in which the liquid is collected is provided for collecting the liquid extracted from the gaseous medium.

10. Wind power installation according to any one of claims 2 to 9,
**characterised in that** a first temperature sensor (16) is provided for detecting the temperature of the first element (10) and a second temperature sensor (18) is provided for detecting the ambient temperature, the temperatures are preferably detected and processed by a control device, and the control device sets the temperature of the first element by varying the cooling power of the cooling device (12).

11. Wind power installation according to claim 10,
**characterised in that** the control device is controlled in such a manner that the temperature of the first element (10) lies below room temperature by a predefinable amount and/or does not exceed a predefinable temperature.

12. Wind power installation, consisting of a tower and a machine house disposed at the top of the tower for accommodating various machine units of the wind power installation,
**characterised in that** a device according to any one of the preceding claims is disposed in the tower and/or machine house.

13. Wind power installation according to claim 12,
**characterised in that** the device is disposed approximately in the region of the foot of the tower of the wind power installation.

14. Wind power installation according to any one of claims 2 to 13,
**characterised in that** a plurality of air dehumidifying devices according to any one of the preceding claims are disposed in the wind power installation.

15. Wind power installation according to any one of claims 2 to 14,
**characterised in that** approximately from one to ten litres of water, preferably from two to five litres of water, per day are extracted from the air with each air dehumidifying device, and the overall electrical power of the air dehumidifying device is approximately in the range of from 50 to 500 W.

## Revendications

1. Dispositif de déshumidification d'un milieu gazeux, de préférence de l'air, dans un espace essentiellement fermé, de préférence à l'intérieur d'une installation d'énergie éolienne,
**caractérisé par** un premier élément plan (10) et un dispositif de refroidissement (12) couplé à celui-ci pour le refroidissement du premier élément (10) à une température inférieure à la température ambiante et par un deuxième élément (14) pour le refroidissement de la chaleur extraite du premier élément (10), qui est ajoutée de préférence dans l'espace, et en ce que le deuxième élément (14) est relié à une paroi de la tour d'une installation d'énergie éolienne ou formé par la paroi de la tour (32).

2. Installation d'énergie éolienne avec un générateur, le cas échéant un transformateur et un convertisseur couplé au transformateur, dans laquelle un dispositif de déshumidification de l'air selon la revendication 1 est prévu à proximité du générateur ou du transformateur et/ou du convertisseur, le premier élément plan (10) et le dispositif de refroidissement (12) couplé à celui-ci étant configurés pour refroidir le premier élément (10) à une température inférieure à la température régnant à proximité du générateur ou du transformateur et/ou du convertisseur.

3. Installation d'énergie éolienne selon la revendication 2,
**caractérisée en ce que** le dispositif de déshumidification est disposé essentiellement à l'intérieur de l'installation d'énergie éolienne.

4. Installation d'énergie éolienne selon l'une quelconque des revendications 2 ou 3,
**caractérisée en ce que** le dispositif de refroidissement (12) est disposé entre le premier élément (10) et le deuxième élément (14) et les relie de préférence.

5. Installation d'énergie éolienne selon l'une quelconque des revendications 2 à 4,
**caractérisée par** un dispositif de refroidissement exploitant l'effet Peltier.

6. Installation d'énergie éolienne selon l'une quelconque des revendications 2 à 5,
**caractérisée en ce qu'**il est prévu une unité collectrice et/ou un canal d'évacuation du fluide extrait du milieu gazeux.

7. Installation d'énergie éolienne selon la revendication 6,
**caractérisée en ce que** le fluide collecté avec le premier élément plan (10) est conduit hors de l'espace par l'intermédiaire d'un dispositif correspondant, de préférence le canal (20).

8. Installation d'énergie éolienne selon la revendication 7,
**caractérisée en ce que** le canal est disposé dans la zone proche du sol de l'espace, dans le cas d'une installation d'énergie éolienne au pied de la tour.

9. Installation d'énergie éolienne selon l'une quelconque des revendications 2 à 8,
**caractérisée en ce qu'**un espace collecteur, dans lequel le fluide est recueilli, est prévu pour collecter le fluide extrait du milieu gazeux.

10. Installation d'énergie éolienne selon l'une quelconque des revendications 2 à 9,
**caractérisée en ce qu'**un premier capteur de température (16) permettant de détecter la température du premier élément (10) et un deuxième capteur de température (18) permettant de détecter la température ambiante sont prévus, **en ce que** les températures sont détectées et traitées de préférence par un dispositif de commande et le dispositif de commande règle la température du premier élément par des variations de la puissance frigorifique du dispositif de refroidissement (12).

11. Installation d'énergie éolienne selon la revendication 10,
**caractérisée en ce que** le dispositif de commande est commandé de sorte que la température du premier élément (10) est inférieure à la température ambiante dans le cas d'une valeur pouvant être définie et/ou ne dépasse pas une température pouvant être définie.

12. Installation d'énergie éolienne, composée d'une tour et d'une salle des machines disposée au sommet de la tour pour recevoir différents groupes de machines de l'installation d'énergie éolienne,
**caractérisée en ce qu'**un dispositif selon l'une quelconque des revendications précédentes est disposé dans la tour et/ou dans la salle des machines.

13. Installation d'énergie éolienne selon la revendication 12,
**caractérisée en ce que** le dispositif est agencé à peu près dans la zone du pied de l'installation d'énergie éolienne.

14. Installation d'énergie éolienne selon l'une quelconque des revendications 2 à 13,
**caractérisée en ce que** plusieurs installations de déshumidification d'air selon l'une quelconque des revendications précédentes sont disposées dans l'installation d'énergie éolienne.

15. Installation d'énergie éolienne selon l'une quelconque des revendications 2 à 14,
**caractérisée en ce qu'**avec chaque installation de déshumidification d'air, environ un à dix litres d'eau, de préférence deux à cinq litres d'eau, sont extraits chaque jour de l'air et la puissance électrique totale de l'installation de déshumidification d'air est comprise entre 50 et 500 W.
